# EUROPÄISCHE PATENTANMELDUNG

(11) **EP 1 508 515 A1**
(43) Veröffentlichungstag der Anmeldung: **23.02.2005**
(21) Anmeldenummer: 03018875.9
(22) Anmeldetag: 19.08.2003
(51) Int. Cl.: B63B 39/00, B63B 1/38, B63H 1/18

(54) **Mit einem oder mehreren Propellern angetriebenes Schiff**

(71) Anmelder: Flensburger Schiffbau-Gesellschaft mbH & Co. KG, 24939 Flensburg (DE)
(72) Erfinder:
(74) Vertreter: Glawe, Delfs, Moll & Partner

(57) **Zusammenfassung**

Das Schiff weist im Bereich des Propellers im Schiffsrumpf Öffnungen auf, durch die Luft austritt. Durch die gebildete Luftschicht wird die Übertragung von Geräuschen vom Propeller (2) auf den Schiffsrumpf (1) vermindert. Die Luft wird dabei aufgrund der Strömungsgeschwindigkeit des Wassers bei Fahrt des Schiffes (1) angesaugt, so daß zur Erzeugung der Luftblasen (7) keine oder nur sehr wenig zusätzliche Energie erforderlich ist.

## Beschreibung

Die Erfindung betrifft ein Schiff, das mit einem oder mehreren Propellern angetrieben wird und in seinem Rumpf im Bereich des/der Propeller mit Öffnungen versehen ist, die mit Luftzuführungen verbunden sind, durch die beim Betrieb des Schiffes Luft austritt.

Ein Schiff wird üblicherweise mit Propellern angetrieben. Hierbei kommt es beim Propeller zum Phänomen der Kavitation, d. h. Dampfblasenbildung und Zerfall der Dampfblasen durch geringe Drücke auf den Propellerflügeln. Ausdehnung und Art der Kavitation können je nach Schiff und Propeller ganz verschieden sein. Als Folge davon werden durch den Propeller Vibrationen und Geräusche in das Schiff übertragen, die störende Auswirkungen auf die Sicherheit und den Komfort haben. Diese Vibrationen und Geräusche werden klassifiziert nach niederfrequenten Anteilen, die aus der verdrängungswirkung der Propellerflügel und der Propellerkavitation selbst herrühren, sowie nach höherfrequenten Anteilen, die aus der Änderung der Kavitation mit dem Umlauf des Flügels und aus dem Propellerspitzenwirbel kommen. Die niederfrequenten Anteile bewirken im wesentlichen störende Vibrationen, die höherfrequenten Anteile im wesentlichen störende Geräusche. Werden beide im Übermaß auf das Schiff übertragen, sinkt dessen Gebrauchswert erheblich.

Es ist bekannt, durch Lufteinblasung die Wirkungen der Kavitation zu verringern. Einerseits ist es bekannt, direkt auf dem Propellerflügel (meistens an der Vorderkante) Luft einzublasen. Andererseits ist es bekannt, aus speziellen Vorrichtungen aus dem Schiff über dem Propeller Luft in den Spitzenwirbel der Propeller einzublasen. Schließlich ist es bekannt, z. B. vor dem Propeller angeordnete Vorrichtungen vorzusehen, die vor dem Propeller Luft ausblasen, um Luftblasen im und über dem Propellerstrahl zu erzeugen. Alle diese Vorrichtungen können aber die Entstehung von Kavitation und damit die Entstehung der erwähnten Geräusche nur in sehr beschränktem Umfang verhindern.

Um diese Probleme wenigstens teilweise zu beseitigen, ist es bekannt, den Rumpf im Bereich des/der Propeller mit Öffnungen zu versehen, die mit Luftzuführungen verbunden sind (DE 30 46 619 A1). Durch diese Öffnungen wird Preßluft gepreßt, die außen am Schiffsrumpf im Bereich des/der Propeller eine Luftblasen enthaltende Schicht bildet. Diese mehr oder weniger kontinuierliche Luftschicht über dem Propeller an der Außenhaut des Schiffes beeinflußt die Zuströmung zum Propeller nicht. Durch die Luftschicht bzw. Luftblasen enthaltende Wasserschicht entsteht eine Dämpfung, da Luft im Gegensatz zu Wasser ein kompressibles Medium ist. Durch die Luftschicht können wesentliche Anteile der vom Propeller ausgehenden Vibrationen und Geräusche absorbiert werden. Andere Anteile werden an der Luftschicht reflektiert.

Der Vorteil der Geräuschdämpfung wird dabei mit zusätzlichem Energieaufwand erzielt, da Luft komprimiert werden muß, um durch die Öffnungen, die sich unter Wasser befinden, herausgedrückt zu werden. Die Luftmengen sind dabei beträchtlich. In der Entgegenhaltung ist bei einem Propellerantrieb der Nennleistung von 1000 kW die Rede von 8m³/min. Bei größeren Schiffen und damit größeren Propellerleistungen ist die erforderliche Luftmenge selbstverständlich noch größer. Luftmengen von 1000 oder 2000 m³/min sind bei größeren Schiffen durchaus erforderlich. Der entsprechende Energieaufwand ist natürlich beträchtlich.

Die Aufgabe der Erfindung besteht in der Schaffung eines Schiffs, bei dem die Geräuschminderunng mit wesentlich geringerem oder ganz ohne zusätzlichem Energieaufwand erzielt werden kann.

Die erfindungsgemäße Lösung besteht darin, daß die Öffnungen oberhalb oder wenig unter der statischen Wasserlinie, aber unterhalb der dynamischen Wasserlinie bei normaler Fahrgeschwindigkeit des Schiffs angeordnet und so ausgebildet sind, daß die Luft im wesentlichen ohne zusätzliche Gebläse oder dergleichen angesaugt und in das Wasser eingeführt wird.

Unter der statischen Wasserlinie wird dabei die Wasserlinie verstanden, wenn sich das Schiff in Ruhe befindet. Wenn das Schiff fährt, bildet sich insbesondere aufgrund der Heckwelle die dynamische Wasserlinie aus, die im Bereich des Hecks höher ist als die statische Wasserlinie. Da sich die Öffnungen oberhalb oder wenig nur unterhalb der statischen Wasserlinie befinden, kann bei ruhendem Schiff kein Wasser oder nur wenig Wasser in die Öffnungen und die entsprechenden Luftkanäle eindringen. Fährt das Schiff aber, so wird eine Strömungskomponente erzeugt, durch die der hydrostatische Druck verringert wird, so daß die Luft durch die Strömungsgeschwindigkeit des Wassers selbst angesaugt wird. Dies entspricht der physikalischen Erkenntnis, daß bei schneller strömenden Medien der statische Druck abnimmt. Aufgrund dieser Wirkung wird damit im Bereich der Öffnungen ein Unterdruck erzeugt, durch den Luft angesaugt und in das Wasser gesaugt wird, so daß sich die Luftschicht bzw. mit Luftblasen versehene Wasserschicht bilden kann, durch die die erwähnten Geräusche wirksam vermindert oder beseitigt werden. In gewissen Fällen kann zwar die Saugwirkung noch durch Gebläse verstärkt werden, was nur einen geringen Teil der Energie erfordert, als wenn wie beim Stand der Technik diese Saugwirkung nicht ausgenutzt wird. In vielen Fällen ist es aber auch möglich (dies ist selbstverständlich besonders vorteilhaft), ganz auf zusätzliche Gebläse zu verzichten.

Die Erfindung beruht auf dem Gedanken, die dämpfende Luftschicht nach dem Prinzip der Selbstansaugung zu erzeugen und so gleichzeitig eine stabile Schicht definierter Dicke zu erhalten. Dies wird erreicht durch eine an die Linienführung der Schiffsform angepaßte Gestaltung der Öffnung. Vorzugsweise ist die Öffnung in Strömungsrichtung keilförmig ausgeführt, wobei der Keilwinkel an die aktuelle Schiffsform angepaßt wird. Sie kann eine mehr oder weniger ausgeprägte Antunnelung aufweisen. Dadurch entsteht eine heftige lokale Beschleunigung der Strömung, die die Luft aufgrund des lokal verringerten Drucks mitnimmt (Injektorprinzip).

Die Öffnungen sind vorteilhafterweise vor und über dem/den Propeller(n) angebracht. Auf diese Weise wird die Luftwasserschicht während der Fahrt gebildet, ohne dabei das Anströmverhalten des Wassers an den/die Propeller zu behindern.

Vorteilhafterweise wird die Strömungsgeschwindigkeit bei Fahrt des Schiffes im Bereich der Öffnungen weiter erhöht und damit das statische Unterdruck vergrößert, wenn vor den Öffnungen die Strömungsgeschwindigkeit lokal erhöhende Vorsprünge des Schiffsrumpfs vorgesehen sind. Zweckmäßigerweise sind diese Vorsprünge im wesentlichen keilförmig. Insbesondere können sich dabei die Öffnungen am Ende der nach hinten verdickenden keilförmigen Vorsprünge befinden. Die Vorsprünge sind dabei zweckmäßigerweise abgerundet.

Mit Vorteil weist zur Stabilisierung der Luftschicht die Öffnung im Inneren ein Diffusorteil auf, in den die Luft z. B. aus dem Maschinenraum geleitet wird. Evtl. kann zum Ausgleich von Druckverlusten ein kleiner Lüfter geringer Leistung vorgesehen sein. Der hintere Teil der Öffnung besteht aus einer Art Düse, in der die vorgestaute Luft entspannt wird, damit sie gleichmäßig aus der Öffnung austreten kann. Bevor die Luft in den Diffusorteil eintritt, kann sie zusätzlich in einem Vorratsbehälter gesammelt werden, der z. B. zwischen zwei Rahmenspanten angeordnet werden kann.

Die Erfindung wird im folgenden anhand einer vorteilhaften Ausführungsform beispielsweise unter Bezugnahme auf die beigefügten Zeichnungen beschrieben. Es zeigen:
- Fig. 1: das Prinzip der Erfindung; und
- Fig. 2: eine Teilansicht eines erfindungsgemäßen Schiffs schräg von unten.

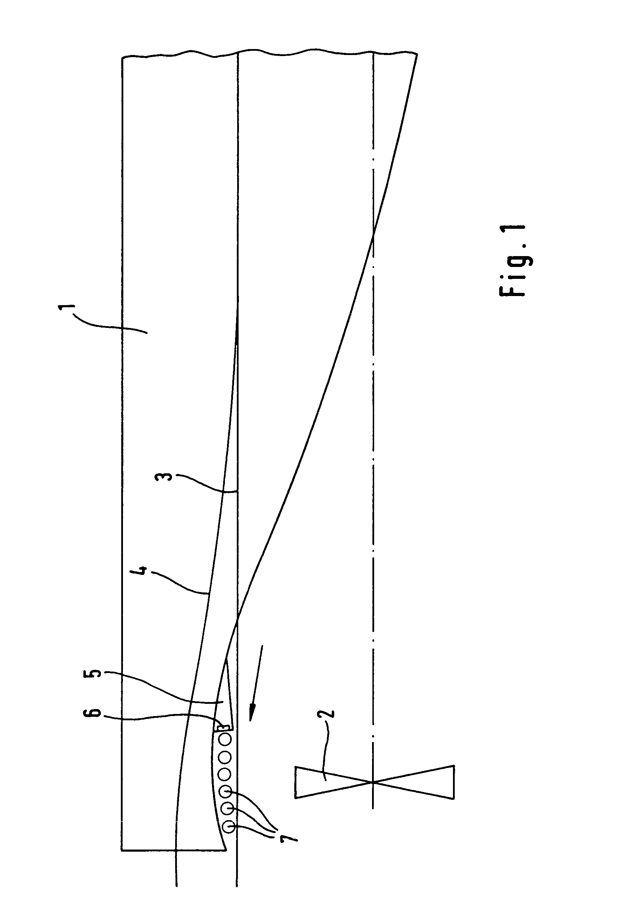

Das Prinzip der Erfindung wird in Figur 1 verdeutlicht. Die Kontur des Schiffsrumpfs ist dabei mit 1 angedeutet. Das Schiff wird dabei mit einem Propeller 2 angetrieben. Befindet sich das Schiff in Ruhe, so hat die Wasseroberfläche die bei 3 angedeutete Stellung, die statische Wasserlinie. Fährt das Schiff, erhält man eine dynamische Wasserlinie 4, die im Bereich des Hecks des Schiffs höher ist als die statische Wasserlinie 3. Dies beruht z. B. auf der Heckwelle. Über und vor dem Propeller 2 sind keilförmige Vorsprünge 5 angeordnet, die sich oberhalb der statischen Wasserlinie 3 befinden, so daß bei ruhendem Schiff diese aus dem Wasser herausragen. Diese keilförmigen Vorsprünge 5 sind mit nichtgezeigten Luftzuführungsleitungen und einer Öffnung an ihrem hinteren Ende versehen. Diese Öffnung des keilförmigen Vorsprungs 6, aus dem die Luft austritt, ist bei 6 angedeutet. Befindet sich das Schiff in Fahrt, befinden sich die keilförmigen Vorsprünge 5 unterhalb der dynamischen Wasserlinie 4. Infolge der Strömungsgeschwindigkeit aufgrund der Fahrgeschwindigkeit des Schiffs, die lokal noch durch die keilförmigen Vorsprünge 5 erhöht wird, bildet sich ein statischer Unterdruck, so daß aus den keilförmigen Elementen 5 Luftblasen herausgesaugt werden, die bei 7 angedeutet sind und eine Luft-/Wasserschicht am Rumpf 1 des Schiffes bilden, die in wirksamerweise die Geräusche des Propellers 2 dämpft oder reflektiert, so daß die Geräuschbelastung im Schiff wesentlich geringer ist. Die Ansaugung kann dabei völlig auf zusätzliche Energiezufuhr verzichten, wobei allerdings zur Erhöhung der Luftleistung Gebläse eingesetzt werden könnten, die allerdings keine großen Differenzen überwinden müssen, so daß der Energieverbrauch niedrig ist.

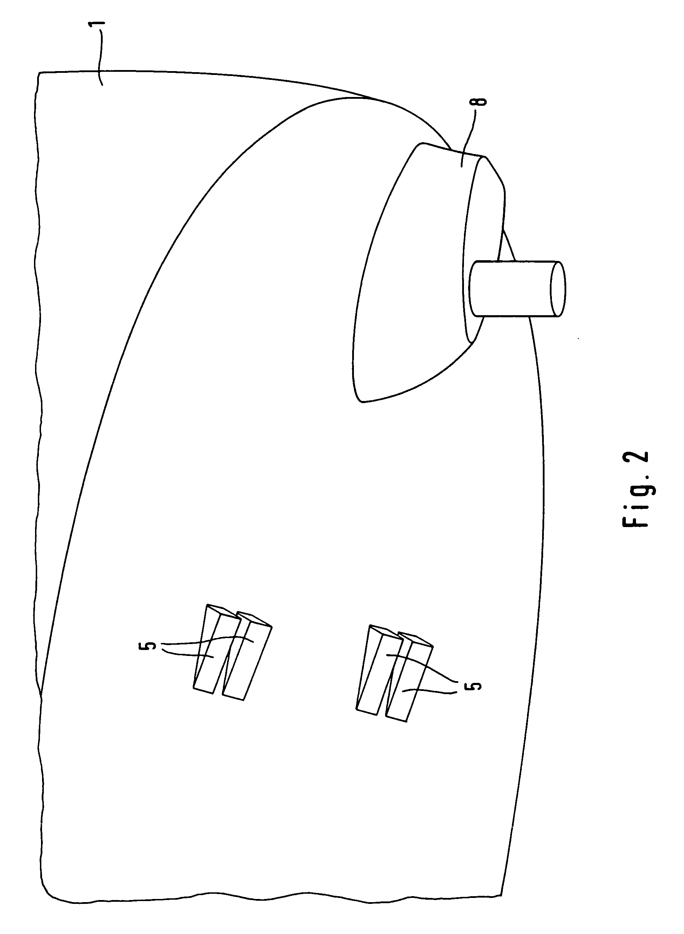

Figur 2 zeigt schräg von unten einen Rumpf 1 eines erfindungsgemäßen Schiffs mit keilförmigen Vorsprüngen 5, aus deren hinterem Ende bei Fahrt des Schiffs Luft herausgesaugt wird. Mit 8 ist noch der Antrieb (das Getriebe eines in Fig. 2 nicht gezeigten Propellers) gezeigt.

## Patentansprüche

1. Schiff, das mit einem oder mehreren Propellern (2) angetrieben wird und in seinem Rumpf (1) im Bereich des/der Propeller (2) mit Öffnungen (6) versehen ist, die mit Luftzuführungen verbunden sind, durch die beim Betrieb des Schiffes (1) Luft (7) austritt, **dadurch gekennzeichnet, daß** die Öffnungen (6) oberhalb oder nur wenig unter der statischen Wasserlinie (3), aber unterhalb der dynamischen Wasserlinie (4) bei normaler Fahrgeschwindigkeit des Schiffs (1) angeordnet und so ausgebildet sind, daß die Luft im wesentlichen ohne zusätzliche Gebläse oder dergleichen angesaugt und in das Wasser eingeführt wird.

2. Schiff nach Anspruch 1, **dadurch gekennzeichnet, daß** die Luft völlig ohne zusätzliche Gebläse oder dergleichen gefördert wird.

3. Schiff nach Anspruch 1 oder 2, **dadurch gekennzeichnet, daß** die Öffnungen (6) vor und über dem/den Propeller(n) (2) angebracht sind.

4. Schiff nach einem der Ansprüche 1 bis 3, **dadurch gekennzeichnet, daß** vor den Öffnungen (6) die Strömungsgeschwindigkeit lokal erhöhende Vorsprünge (5) des Schiffsrumpfes vorgesehen sind.

5. Schiff nach Anspruch 4, **dadurch gekennzeichnet, daß** die Vorsprünge (5) im wesentlichen keilförmig sind.

6. Schiff nach Anspruch 5, **dadurch gekennzeichnet, daß** die Öffnungen (6) sich am Ende der nach hinten verdickenden keilförmigen Vorsprünge (5) befinden.

7. Schiff nach einem der Ansprüche 4 bis 6, **dadurch gekennzeichnet, daß** die Vorsprünge (5) abgerundet sind.
